# FASCICULE DE BREVET EUROPEEN

(11) **EP 4 077 133 B1**
(45) Date de publication et mention de la délivrance du brevet: **15.05.2024**
(21) Numéro de dépôt: 20820930.4
(22) Date de dépôt: 09.12.2020
(51) Int. Cl.: B64D 11/06

(54) **ARRANGEMENT DE SIEGES PASSAGERS**
PASSGIERSITZANORDNUNG
PASSENGER SEAT ARRANGEMENT

(30) Priorité: 20.12.2019 FR 1915108
(43) Date de publication de la demande: 26.10.2022
(73) Titulaire: Safran Seats, 78370 Plaisir (FR); Safran Seats USA LLC, Gainesville, TX 76240 (US)
(72) Inventeur: ROUSSE, Florelle, 77550 MOISSY-CRAMAYEL (FR); GLAIN, Arthur, 77550 MOISSY-CRAMAYEL (FR); BEAUVAIS, Adrien, 77550 MOISSY-CRAMAYEL (FR); FOEK LE, Nguyan, 77550 MOISSY-CRAMAYEL (FR); MORALES, David, 77550 MOISSY-CRAMAYEL (FR)
(74) Mandataire: Marconnet, Sébastien
(86) Numéro de dépôt international: PCT/EP2020/085236
(87) Numéro de publication internationale: WO 2021/122207

(56) Documents cités:
- EP-A1- 2 944 571
- EP-A1- 3 521 167
- US-A- D 443 990

## Description

La présente invention porte sur un arrangement de sièges passagers. L'invention trouve une application particulièrement avantageuse, mais non exclusive, dans le domaine de l'aviation commerciale, principalement pour un espace de cabine d'avion de type classe affaires ou prémium.

Au cours de ces dernières années, de nombreux arrangements de sièges en classe affaires ont été développés de façon à trouver un compromis entre le confort des passagers et une optimisation d'une densité de remplissage de sièges à l'intérieur de la cabine d'avion. Les arrangements de sièges doivent également garantir un espace suffisant pour le service effectué par le personnel de bord. Toutefois, peu de solutions sont adaptées aux avions monocouloirs, principalement utilisés pour les parcours courts et moyen-courriers.

En effet, dans les arrangements de sièges existants, l'accès direct aux couloirs de circulation pour tous les sièges n'est pas systématiquement garanti. En outre, les agencements pour les cabines premium et classe affaires ne comportent pas tous des sièges aptes à prendre une position lit. Les espaces de vie des passagers peuvent également être inégaux en fonction du positionnement du siège à l'intérieur de la cabine d'avion. Les configurations de sièges existantes sont également difficilement adaptables à différentes tailles de cabine et peuvent présenter des problèmes d'accès pour les personnes à mobilité réduite.

Le document WO2014/049362 décrit un aménagement d'unités de sièges comportant au moins un groupe arrière de deux unités de sièges ainsi qu'au moins un groupe avant de deux unités de sièges. Chaque groupe de deux unités de sièges comporte une unité de siège disposée du côté du couloir de circulation et une unité de siège disposée du côté d'un hublot. Toutefois, les sièges situés côte à côte dans un groupe sont isolés l'un par rapport à l'autre, ce qui impose qu'une largeur du passage d'accès pour les sièges situés du côté des hublots soit au moins égale à la largeur règlementaire (27,94 cm ou 11 pouces) afin de garantir une évacuation d'urgence. Une telle largeur réduit donc l'espace de vie des passagers. En outre, les sièges situés côté hublot sont alignés et disposés les uns derrière les autres, ce qui ne permet pas d'optimiser le remplissage de la cabine d'avion. Le document EP 2 944 571 A1 décrit différents possibles arrangements de sièges dans une cabine d'avion.

L'invention vise à remédier efficacement à ces inconvénients en proposant une cabine d'avion ayant un axe longitudinal et comportant au moins un couloir de circulation et un arrangement d'unités de sièges, une unité de siège comportant notamment un siège muni d'une assise et d'un dossier ainsi qu'une zone de pieds, ledit siège étant mobile entre une position assise et une position lit, ledit arrangement d'unités de sièges comportant:
- au moins un groupe arrière de deux unités de sièges,
- au moins un groupe avant de deux unités de sièges,
- chaque groupe de deux unités de sièges comportant une unité de siège disposée du côté du couloir de circulation, dite "unité de siège côté couloir" et une unité de siège disposée du côté d'un hublot dite "unité de siège côté hublot",
- chaque siège d'un groupe d'unités de sièges présentant un axe formant un angle non nul par rapport à l'axe longitudinal de la cabine d'avion, de sorte que les sièges de chaque groupe sont tournés vers le couloir de circulation,
- un premier passage d'accès vers le couloir de circulation associé à l'unité de siège côté hublot du groupe arrière s'étendant entre la zone de pieds et l'assise de l'unité de siège côté couloir du groupe arrière, et
- un deuxième passage d'accès vers le couloir de circulation associé à l'unité de siège côté hublot du groupe arrière s'étendant entre l'unité de siège côté couloir du groupe avant et la zone de pieds de l'unité de siège côté couloir du groupe arrière.

L'invention permet ainsi un accès direct à l'allée pour tous les passagers, tout en offrant un grand espace de vie et une haute densité de remplissage de sièges à l'intérieur de la cabine d'avion. Par ailleurs, étant donné que le siège côté hublot dispose de deux passages d'accès au couloir de circulation, le passage dédié pourra présenter une largeur réduite de façon à optimiser l'encombrement latéral des unités de sièges, tandis que le premier passage pourra être emprunté notamment en cas d'évacuation d'urgence.

L'invention propose en outre une configuration flexible pouvant être configurée selon différentes longueurs de cabine d'avion pour augmenter ou diminuer la densité de remplissage de sièges de la cabine sans modifier les dimensions d'une unité de siège. L'invention offre également un espace de vie sensiblement égal pour tous les passagers de la cabine d'avion, ainsi qu'une confidentialité raisonnable pour tous les passagers.

Selon une réalisation, une largeur du deuxième passage d'accès est inférieure à une largeur du premier passage d'accès.

Selon une réalisation, il existe un recouvrement longitudinal entre au moins une portion de recouvrement de la zone de pieds de l'unité de siège côté couloir du groupe arrière et au moins une portion du dossier de l'unité de siège côté couloir du groupe avant.

Selon une réalisation, il existe un recouvrement longitudinal entre au moins une portion de la zone de pieds de l'unité de siège côté hublot du groupe arrière et au moins une portion du dossier de l'unité de siège côté hublot du groupe avant.

Selon une réalisation, la portion de recouvrement de la zone de pieds avec au moins une portion du dossier de l'unité de siège côté hublot du groupe avant est située entre les deux unités de sièges du groupe avant.

Selon une réalisation, les axes des sièges d'un même groupe d'unités de sièges sont parallèles l'un par rapport à l'autre.

Selon une réalisation, les axes des sièges d'un même groupe d'unités de sièges forment un angle non nul l'un par rapport à l'autre.

Selon une réalisation, les sièges d'un même groupe d'unités de sièges sont disposés côte à côte l'un par rapport à l'autre.

Selon une réalisation, les sièges d'un même groupe d'unités de sièges sont décalés longitudinalement l'un par rapport à l'autre.

Selon une réalisation, une cloison sépare les sièges d'un même groupe d'unités de sièges.

Selon une réalisation, la cloison s'étend depuis une coque située à l'arrière des sièges jusqu'à un bord avant d'une assise d'un siège.

Selon une réalisation, une unité de siège côté couloir comporte une porte escamotable de façon à pouvoir sélectivement ouvrir ou fermer le premier passage d'accès.

Selon une réalisation, une zone de pieds est intégrée dans une console munie d'une paroi supérieure pouvant servir de table et/ou dans une console munie d'un meuble de rangement.

Selon une réalisation, une unité de siège comporte un écran.

Selon une réalisation, une unité de siège comporte au moins un accoudoir.

Selon une réalisation, une unité de siège comporte une tablette repas mobile entre une position déployée et une position stockée.

Selon une réalisation, une paroi transversale sépare le groupe avant d'unités de sièges et le groupe arrière d'unités de sièges, ladite paroi transversale s'étendant d'une paroi de la cabine d'avion jusqu'au couloir de circulation.

Selon une réalisation, le premier passage d'accès présente une largeur comprise entre 27,94 cm (11 pouces) et 76,20 cm (30 pouces).

Selon une réalisation, le deuxième passage d'accès présente une largeur comprise entre 10,16 cm (4 pouces) et 27,94 cm (11 pouces), la valeur de 27,94 cm (11 pouces) étant exclue.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue de dessus d'une cabine d'avion munie d'un arrangement d'unités de sièges selon la présente invention;
[Fig. 2] [Fig. 3] [Fig. 4] Les figures 2, 3, et 4 sont des vues en perspective suivant différents angles d'un arrangement de sièges selon la présente invention;
[Fig. 5] La figure 5 est une vue de dessus d'un arrangement d'unités de sièges selon la présente invention montrant des sièges en position assise;
[Fig. 6] La figure 6 est une vue de dessus d'un arrangement d'unités de sièges selon la présente invention montrant des sièges en position lit.

II est à noter que, sur les figures, les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

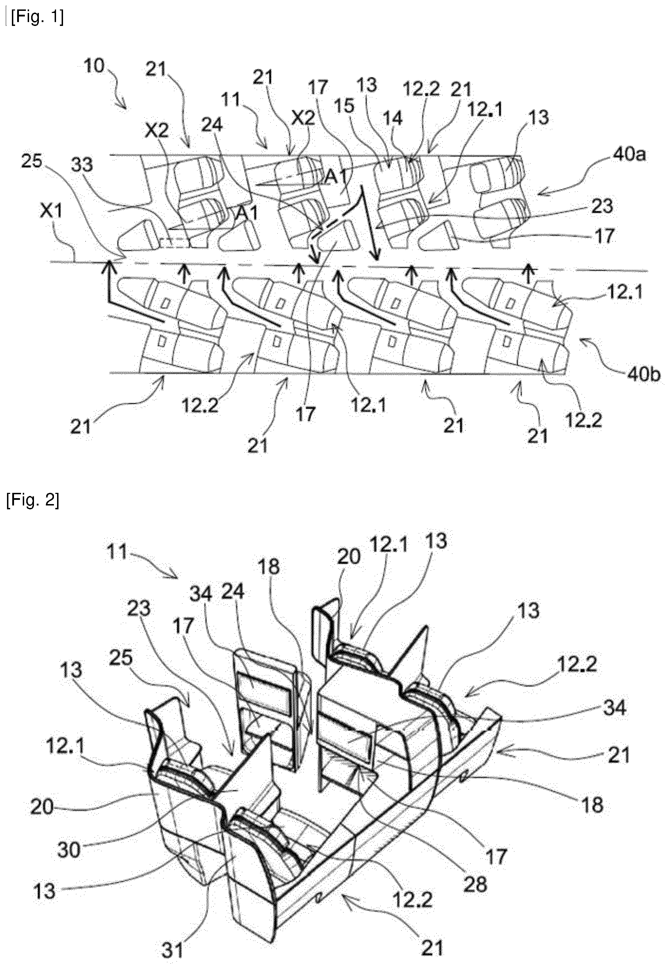

La figure 1 montre une cabine d'avion 10 s'étendant selon un axe longitudinal X1 et comportant un arrangement 11 d'unités de sièges 12.1, 12.2.

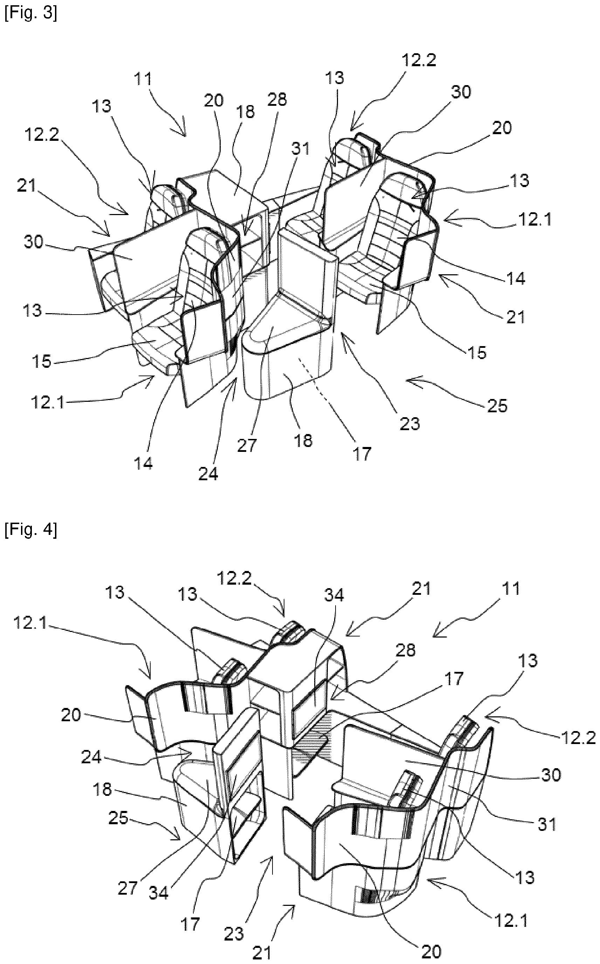

L'arrangement 11 comprend une pluralité d'unités de sièges 12.1, 12.2 ayant chacune un siège individuel 13. Un siège 13 comprend un dossier 14, notamment réglable en inclinaison et une assise 15, notamment potentiellement réglable en inclinaison, tel que cela est visible en figure 3.

Dans l'exemple représenté, les sièges 13 sont orientés vers l'avant de la cabine d'avion 10, c'est-à-dire en direction d'une zone comportant un cockpit de l'avion. Dans un mode de réalisation alternatif, les sièges 13 sont orientés vers l'arrière de la cabine d'avion 10, c'est-à-dire en direction d'une zone opposée du cockpit de l'avion.

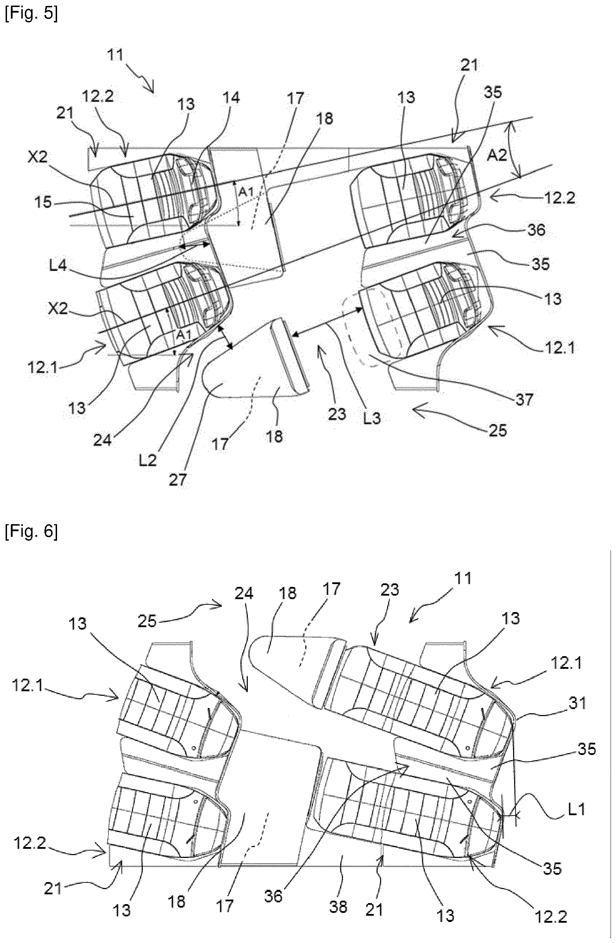

Avantageusement, un siège 13 est apte à passer d'une position "assise", correspondant à la position utilisée notamment lors des phases d'arrêt, de roulage, de décollage, et d'atterrissage de l'avion, et une position "lit" (cf. figure 6), dans laquelle le siège 13 définit un plan de couchage sensiblement horizontal pour le passager. La position "assise" et la position "lit" constituent des configurations du siège 13 dans deux positions extrêmes. De préférence, le siège 13 pourra également prendre des positions intermédiaires, dites positions "relax", entre ces deux positions extrêmes.

En outre, une unité de siège 12.1, 12.2 comporte une zone de pieds 17 destinée à supporter les pieds d'un passager lorsque le siège 13 correspondant est dans une position lit. La zone de pieds 17 peut comporter un coussin fixe, notamment agencé dans un logement d'une console 18 ouvert en direction du siège 13 correspondant. Préférentiellement, le coussin fixe de la zone de pieds 17 se situe dans un prolongement du siège 13 lorsque ce dernier se trouve en position "lit".

Comme on peut le voir sur les figures 2, 3, et 4, une unité de siège 12.1, 12.2 peut également comporter une coque 20 fixe entourant au moins en partie le siège 13 de façon à créer un espace intérieur au moins en partie clos dans lequel est agencé le siège 13. Une telle coque 20 permet donc de garantir l'intimité de chaque passager.

Chaque siège 13 présente un axe X2 correspondant à un axe horizontal se situant dans un plan vertical médian du siège.

L'arrangement 11 d'unités de sièges 12.1, 12.2 comporte au moins un groupe 21 arrière de deux unités de sièges 12.1, 12.2 et au moins un groupe 21 avant de deux unités de sièges 12.1, 12.2.

II est à noter que les termes "avant" et "arrière" employés en relation avec l'expression "unité de siège" ou "groupe d'unités de sièges" définissent localement une position relative d'une unité de siège 12.1,12.2 ou d'un groupe 21 d'unités de sièges à l'intérieur d'une colonne, et ne se réfèrent aucunement à une orientation d'un siège à l'intérieur de la cabine d'avion 10. En d'autres termes, l'expression "unité de siège avant" ou "groupe avant d'unité de sièges" signifie que l'unité de siège 12.1, 12.2 ou le groupe 21 d'unités de sièges est positionné directement devant une autre unité de siège ou un autre groupe d'unités de sièges à l'intérieur d'une colonne d'unités de sièges, tandis que l'expression "unité de siège arrière" ou "groupe arrière d'unité de siège" signifie que l'unité de siège 12.1, 12.2 ou le groupe 21 d'unités de sièges est positionné directement derrière une autre unité de siège ou un autre groupe d'unités de sièges à l'intérieur d'une colonne d'unités de sièges.

Dans un groupe 21 d'unités de sièges 12.1, 12.2, les sièges 13 peuvent être légèrement décalés longitudinalement l'un par rapport à l'autre d'une distance L1 de quelques centimètres, tel que cela est visible sur la figure 6. En variante, les sièges 13 d'un groupe 21 sont disposés côte à côte de sorte qu'aucun décalage longitudinal existe entre les sièges 13 d'un même groupe 21.

Chaque groupe 21 de deux unités de sièges comporte une unité de siège 12.1 disposée du côté d'un couloir de circulation, dite "unité de siège côté couloir" et une unité de siège 12.2 disposée du côté d'un hublot dite "unité de siège côté hublot".

Comme on peut le voir notamment sur les figures 1 et 5, chaque siège 13 d'un groupe 21 d'unités de sièges 12.1, 12.2 présente un axe X2 formant un angle A1 non nul notamment compris entre 5 degrés et 30 degrés par rapport à l'axe longitudinal X1 de la cabine d'avion 10, de sorte que les sièges 13 d'un groupe 21 d'unité de sièges 12.1, 12.2 sont tournés vers un couloir de circulation 25.

Les axes X2 des sièges 13 d'un même groupe 21 d'unités de sièges 12.1, 12.2 forment un angle A2 non nul l'un par rapport à l'autre, notamment compris entre 5 et 15 degrés. Autrement dit, les axes X2 des sièges 13 d'un même groupe 21 forment des angles différents par rapport à l'axe longitudinal X1 de la cabine d'avion 10. Dans ce cas, les axes X2 de deux sièges 13 adjacents d'un groupe 21 se coupent de préférence vers l'arrière du groupe 21 de sièges.

En variante, les axes X2 des sièges d'un même groupe 21 d'unités de sièges sont parallèles l'un par rapport à l'autre. Les axes X2 des sièges 13 d'un même groupe 21 forment alors le même angle par rapport à l'axe longitudinal X1 de la cabine d'avion 10.

Les sièges 13 d'un groupe d'unités de sièges 21 pourront former un bloc de deux sièges montés sur une palette support commune qui est fixée aux rails de la cabine d'avion 10 au moyen de verrous de type connu.

Par ailleurs, comme on peut le voir sur la figure 1, un premier passage d'accès 23 vers le couloir de circulation 25 associé à l'unité de siège 12.2 positionnée côté hublot du groupe 21 arrière s'étend entre la zone de pieds 17 et l'assise 15 de l'unité de siège côté couloir 12.1 du groupe 21 arrière. Ce premier passage d'accès 23 correspond à l'espace de jambes prévu pour le passager voisin installé sur l'unité de siège côté couloir 12.1.

Un deuxième passage d'accès 24 vers le couloir de circulation 25 associé à l'unité de siège côté hublot 12.2 du groupe 21 arrière s'étend entre l'unité de siège côté couloir 12.1 du groupe 21 avant et la zone de pieds 17 de l'unité de siège côté couloir 12.1 du groupe 21 arrière.

Comme cela est illustré par la figure 5, le deuxième passage d'accès 24 présente une largeur L2 inférieure à la largeur L3 du premier passage d'accès 23. Dans un exemple de réalisation, le premier passage d'accès 23 présente une largeur L3 comprise entre 27,94 cm (11 pouces) et 76,20 cm (30 pouces) afin de faciliter l'accès aux sièges côté couloir de circulation 25 pour les personnes à mobilité réduite. Le deuxième passage 24 présente une largeur L2 comprise entre 10,16 cm (4 pouces) et 27,94 cm (11 pouces), la valeur de 27,94 cm (11 pouces) étant exclue.

Ainsi, le deuxième passage d'accès 24 permet à tous les passagers situés du côté des hublots d'accéder au couloir de circulation 25 sans déranger le passager voisin. Le premier passage d'accès 23 pourra également servir à accéder au couloir de circulation 25, notamment en cas d'évacuation d'urgence.

L'accès direct au couloir de circulation 25 est facilité par le fait que les pieds d'un passager se situent du côté du couloir de circulation 25.

Avantageusement, comme on peut le voir sur la figure 5, il existe un recouvrement longitudinal entre au moins une portion de la zone de pieds 17 de l'unité de siège côté couloir 12.1 du groupe 21 arrière et au moins une portion du dossier 14 de l'unité de siège côté couloir 12.1 du groupe 21 avant.

De préférence, il existe également un recouvrement longitudinal L4 entre au moins une portion de recouvrement de la zone de pieds 17 de l'unité de siège côté hublot 12.2 du groupe 21 arrière et au moins une portion du dossier 14 de l'unité de siège côté hublot 12.2 du groupe 21 avant. La portion de recouvrement de la zone de pieds 17 avec au moins une portion du dossier 14 de l'unité de siège côté hublot 12.2 du groupe 21 avant est située entre les deux unités de sièges 12.1, 12.2 du groupe 21 avant.

De préférence, la zone de pieds 17 est intégrée dans une console 18 située à distance du siège correspondant 13. La console 18 pourra être munie d'une paroi supérieure 27 pouvant servir de table, comme cela est le cas pour la console 18 de l'unité de siège côté couloir 12.1 (cf. figures 3 et 4). En variante, la console 18 pourra être munie d'un meuble de rangement 28, comme cela est le cas pour la console 18 de l'unité de siège côté hublot 12.2 (cf. figures 3 et 4). Le meuble de rangement 28 pourra être superposé verticalement au moins en partie avec la zone de pieds 17.

Comme on peut le voir sur les figures 2, 3, et 4, une cloison 30 pourra séparer les sièges 13 d'un même groupe 21. La cloison 30 pourra être amovible pour faciliter la communication entre deux passagers côte à côte.

La cloison 30 s'étend depuis une coque 20 située à l'arrière des sièges 13 jusqu'à un bord avant d'une assise 15 d'un siège 13, c'est-à-dire au niveau de l'espace des jambes d'un passager.

Une paroi transversale 31, notamment formée par une coque 20, pourra également séparer le groupe 21 avant d'unités de sièges 12.1, 12.2 et le groupe 21 arrière d'unités de sièges 12.1, 12.2. La paroi transversale 31 s'étend depuis une paroi de la cabine d'avion jusqu'au couloir de circulation 25.

Une unité de siège 12.1, 12.2 côté couloir pourra comporter une porte escamotable 33 de façon à pouvoir sélectivement ouvrir ou fermer le premier passage d'accès 23, tel que montré sur la figure 1.

Une unité de siège 12.1, 12.2 pourra comporter un écran 34 positionné en face du passager, tel que montré sur les figures 2 et 4. A cet effet, l'écran 34 pourra être intégré dans un logement dédié d'une coque 20 d'un siège 13 avant ou sur un bras mobile relié mécaniquement à la coque 20.

Comme on peut le voir sur les figures 5 et 6, une unité de siège 12.1, 12.2 comporte de préférence au moins un accoudoir 35 ménagé dans un meuble central 36 situé entre deux sièges 13 d'un même groupe 21.

Une unité de siège 12.1, 12.2 comporte une tablette repas 37 représentée sur la figure 5 mobile entre une position déployée et une position stockée. En position stockée, la tablette repas 37 pourra être logée dans un logement du meuble central 36, comme cela est représenté sur les figures. En variante, la tablette repas 37 pourra être intégrée dans une autre partie d'une unité de siège 12.1, 12.2.

Suivant un exemple particulier de réalisation, une zone de pieds 17 pourra être moins large que l'assise 15 de sorte que le plan de couchage d'un siège 13 en position lit présente une largeur réduite au niveau de la zone de pieds 17. Le plan de couchage peut présenter une longueur comprise entre 190,50 cm (75 pouces) et 203,20 cm (80 pouces). Le couloir de circulation 25 pourra présenter une largeur comprise entre 45,72 cm (18 pouces) et 63,50 cm (25 pouces) pour faciliter le service réalisé par le personnel de bord.

En outre, une unité de siège côté hublot 12.2 peut comporter éventuellement un coussin fixe 38, tel que montré sur la figure 6. En particulier, le coussin fixe 38 permet une maximisation du plan de couchage. A cet effet, le coussin fixe 38 est avantageusement destiné à être positionné dans un prolongement du siège 13, notamment un prolongement latéral, lorsque ce dernier est en position "lit".

Comme on peut le voir sur la figure 1, l'arrangement 11 d'unités de sièges 12.1, 12.2 comporte deux colonnes 40a, 40b de groupes 21 de deux unités de sièges 12.1, 12.2 s'étendant préférentiellement selon l'axe longitudinal X1 de la cabine d'avion 10. A l'intérieur d'une colonne 40a, 40b, les unités de sièges 12.1, 12.2 peuvent être orientées de telle façon que le siège 13 soit tourné vers l'avant et/ou vers l'arrière de l'avion. Les deux colonnes 40a, 40b sont séparées entre elles par le couloir de circulation 25.

En variante, la cabine d'avion 10 pourra comporter deux couloirs de circulation 25 définis chacun par une colonne centrale de groupes 21 d'unités de sièges 12.1, 12.2 et une colonne latérale de groupes 21 d'unités de sièges 12.1, 12.2 correspondante.

L'optimisation de la densité de cabine d'avion 10 par rapport aux dimensions de cette dernière est notamment possible en modifiant l'angle A1 de l'axe X2 des sièges par rapport à l'axe longitudinal X1 de la cabine d'avion 10. Il est également possible de modifier la longueur de recouvrement L4 entre les unités de sièges 12.1, 12.2.

Il est possible de faire varier le pas entre deux sièges 13 entre 152,40 cm (60 pouces) et 203,20 cm (80 pouces), en fonction des dimensions de la cabine d'avion 10. On rappelle que le pas entre deux sièges 13 correspond à la distance entre deux points de référence de deux sièges 13 adjacents situés l'un derrière l'autre.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Cabine d'avion (10) ayant un axe longitudinal (X1) et comportant au moins un couloir de circulation (25) et un arrangement (11) d'unités de sièges (12.1, 12.2), une unité de siège (12.1, 12.2) comportant notamment un siège (13) muni d'une assise (15) et d'un dossier (14) ainsi qu'une zone de pieds (17), ledit siège (13) étant mobile entre une position assise et une position lit, ledit arrangement (11) d'unités de sièges (12.1, 12.2) comportant:
- au moins un groupe (21) arrière de deux unités de sièges (12.1, 12.2),
- au moins un groupe (21) avant de deux unités de sièges (12.1, 12.2),
- chaque groupe (21) de deux unités de sièges (12.1, 12.2) comportant une unité de siège (12.1) disposée du côté du couloir de circulation (25), dite "unité de siège côté couloir" et une unité de siège (12.2) disposée du côté d'un hublot dite "unité de siège côté hublot",
**caractérisée en ce que**
- chaque siège (13) d'un groupe (21) d'unités de sièges (12.1, 12.2) présentant un axe (X2) formant un angle non nul par rapport à l'axe longitudinal (X1) de la cabine d'avion (10), de sorte que les sièges (13) de chaque groupe (21) sont tournés vers le couloir de circulation (25),
- un premier passage d'accès (23) vers le couloir de circulation (25) associé à l'unité de siège côté hublot (12.2) du groupe (21) arrière s'étendant entre la zone de pieds (17) et l'assise (15) de l'unité de siège côté couloir (12.1) du groupe (21) arrière, et
- un deuxième passage d'accès (24) vers le couloir de circulation (25) associé à l'unité de siège côté hublot (12.2) du groupe (21) arrière s'étendant entre l'unité de siège côté couloir (12.1) du groupe (21) avant et la zone de pieds (17) de l'unité de siège côté couloir (12.1) du groupe (21) arrière,
et **en ce qu'**il existe un recouvrement longitudinal entre au moins une portion de la zone de pieds (17) de l'unité de siège côté couloir (12.1) du groupe (21) arrière et au moins une portion du dossier (14) de l'unité de siège côté couloir (12.1) du groupe (21) avant.

2. Cabine d'avion selon la revendication 1, **caractérisée en ce qu'**une largeur (L2) du deuxième passage d'accès (23) est inférieure à une largeur (L3) du premier passage d'accès (24).

3. Cabine d'avion selon la revendication 1 ou 2, **caractérisée en ce qu'**il existe un recouvrement longitudinal (L4) entre au moins une portion de la zone de pieds (17) de l'unité de siège côté hublot (12.2) du groupe (21) arrière et au moins une portion du dossier (14) de l'unité de siège côté hublot (12.2) du groupe (21) avant.

4. Cabine d'avion selon la revendication 3, **caractérisée en ce que** la portion de recouvrement de la zone de pieds (17) avec au moins une portion du dossier (14) de l'unité de siège côté hublot (12.2) du groupe (21) avant est située entre les deux unités de sièges (12.1, 12.2) du groupe (21) avant.

5. Cabine d'avion selon l'une quelconque des revendications 1 à 4, **caractérisée en ce que** les axes (X2) des sièges (13) d'un même groupe (21) d'unités de sièges (12.1, 12.2) sont parallèles l'un par rapport à l'autre.

6. Cabine d'avion selon l'une quelconque des revendications 1 à 4, **caractérisée en ce que** les axes (X2) des sièges (13) d'un même groupe (21) d'unités de sièges (12.1, 12.2) forment un angle non nul l'un par rapport à l'autre.

7. Cabine d'avion selon l'une quelconque des revendications 1 à 6, **caractérisée en ce que** les sièges (13) d'un même groupe (21) d'unités de sièges (12.1, 12.2) sont disposés côte à côte l'un par rapport à l'autre.

8. Cabine d'avion selon l'une quelconque des revendications 1 à 7, **caractérisée en ce que** les sièges (13) d'un même groupe (21) d'unités de sièges (12.1, 12.2) sont décalés longitudinalement l'un par rapport à l'autre.

9. Cabine d'avion selon l'une quelconque des revendications 1 à 8, **caractérisée en ce qu'**une cloison (30) sépare les sièges (13) d'un même groupe (21) d'unités de sièges (12.1, 12.2).

10. Cabine d'avion selon la revendication 9, **caractérisée en ce que** la cloison (30) s'étend depuis une coque (20) située à l'arrière des sièges (13) jusqu'à un bord avant d'une assise (15) d'un siège (13).

11. Cabine d'avion selon l'une quelconque des revendications 1 à 10, **caractérisée en ce qu'**une unité de siège (12.1, 12.2) côté couloir comporte une porte escamotable (33) de façon à pouvoir sélectivement ouvrir ou fermer le premier passage d'accès (23).

12. Cabine d'avion selon l'une quelconque des revendications 1 à 11, **caractérisée en ce qu'**une zone de pieds (17) est intégrée dans une console (18) munie d'une paroi supérieure (27) pouvant servir de table et/ou dans une console (18) munie d'un meuble de rangement (28).

13. Cabine d'avion selon l'une quelconque des revendications 1 à 12, **caractérisée en ce qu'**une unité de siège (12.1, 12.2) comporte un écran (34).

14. Cabine d'avion selon l'une quelconque des revendications 1 à 13, **caractérisée en ce qu'**une unité de siège (12.1 , 12.2) comporte au moins un accoudoir (35).

15. Cabine d'avion selon l'une quelconque des revendications 1 à 14, **caractérisée en ce qu'**une unité de siège (12.1, 12.2) comporte une tablette repas (37) mobile entre une position déployée et une position stockée.

16. Cabine d'avion selon l'une quelconque des revendications 1 à 15, **caractérisée en ce qu'**une paroi transversale (31) sépare le groupe (21) avant d'unités de sièges (12.1, 12.2) et le groupe (21) arrière d'unités de sièges (12.1, 12.2), ladite paroi transversale (31) s'étendant d'une paroi de la cabine d'avion jusqu'au couloir de circulation (25).

17. Cabine d'avion selon l'une quelconque des revendications 1 à 16, **caractérisée en ce que** le premier passage d'accès (23) présente une largeur comprise entre 27,94 cm (11 pouces) et 76,20 cm (30 pouces).

18. Cabine d'avion selon l'une quelconque des revendications 1 à 17, **caractérisée en ce que** le deuxième passage d'accès (24) présente une largeur comprise entre 10,16 cm (4 pouces) et 27,94 cm (11 pouces), la valeur de 27,94 cm (11 pouces) étant exclue. 1

## Patentansprüche

1. Flugzeugkabine (10) mit einer Längsachse (X1) und mindestens einem Gang (25) und einer Anordnung (11) von Sitzeinheiten (12.1, 12.2), wobei eine Sitzeinheit (12.1, 12.2) insbesondere einen mit einer Sitzfläche (15) und einer Rückenlehne (14) sowie einem Fußbereich (17) versehenen Sitz (13) umfasst, wobei der Sitz (13) zwischen einer Sitzstellung und einer Bettstellung bewegbar ist, wobei die Anordnung (11) von Sitzeinheiten (12.1, 12.2) aus:
- mindestens einer hinteren Gruppe (21) von zwei Sitzeinheiten (12.1, 12.2),
- mindestens einer vorderen Gruppe (21) von zwei Sitzeinheiten (12.1, 12.2),
- wobei jede Gruppe (21) von zwei Sitzeinheiten (12.1, 12.2) eine Sitzeinheit (12.1) auf der Seite des Ganges (25), sogenannte "gangseitige Sitzeinheit", und eine Sitzeinheit (12.2) auf der Seite eines Fensters, sogenannte "fensterseitige Sitzeinheit" umfasst, besteht,
**dadurch gekennzeichnet**
- jeder Sitz (13) einer Gruppe (21) von Sitzeinheiten (12.1, 12.2) eine Achse (X2) aufweist, die mit der Längsachse (X1) der Flugzeugkabine (10) einen von Null verschiedenen Winkel bildet, so dass die Sitze (13) jeder Gruppe (21) dem Gang (25) zugewandt sind,
- ein erster Zugang (23) zum Gang (25), der der fensterseitigen Sitzeinheit (12.2) der hinteren Gruppe (21) zugeordnet ist, zwischen dem Fußbereich (17) und der Sitzfläche (15) des gangseitigen Sitzeinheit (12.1) der hinteren gruppe (21) sich erstreckt, und
- ein zweiter Zugang (24) zum Gang (25), der der fensterseitigen Sitzeinheit (12.2) der hinteren Gruppe (21) zugeordnet ist, zwischen der gangseitigen Sitzeinheit (12.1) der vorderen Gruppe (21) und dem Fußbereich (17) der gangseitigen Sitzeinheit (12.1) der hinteren Gruppe (21) sich erstreckt, und
- eine Längsüberlappung zwischen zumindest einem Abschnitt des Fußbereichs (17) der gangseitigen Sitzeinheit (12.1) der hinteren Gruppe (21) und zumindest einem Abschnitt der Rückenlehne (14) der gangseitigen Sitzeinheit (12.1) der vorderen Gruppe (21) besteht.

2. Flugzeugkabine nach Anspruch 1, **dadurch gekennzeichnet, dass** eine Breite (L2) des zweiten Zugangs (23) geringer als eine Breite (L3) des ersten Zugangs (24) ist.

3. Flugzeugkabine nach Anspruch 1 oder 2, **dadurch gekennzeichnet, dass** zwischen zumindest einem Abschnitt des Fußbereichs (17) der fensterseitigen Sitzeinheit (12.2) der hinteren Gruppe (21) und zumindest einem Abschnitt der Rückenlehne (14) der fensterseitigen Sitzeinheit (12.2) der vorderen Gruppe (21) eine Längsüberlappung (L4) besteht.

4. Flugzeugkabine nach Anspruch 3, **dadurch gekennzeichnet, dass** der Überlappungsabschnitt des Fußbereichs (17) mit mindestens einem Abschnitt der Rückenlehne (14) der fensterseitigen Sitzeinheit (12.2) der vorderen Gruppe (21) zwischen den beiden Sitzeinheiten (12.1, 12.2) der vorderen Gruppe (21) angeordnet ist.

5. Flugzeugkabine nach einem der Ansprüche 1 bis 4, **dadurch gekennzeichnet, dass** die Achsen (X2) der Sitze (13) derselben Gruppe (21) von Sitzeinheiten (12.1, 12.2) parallel zueinander sind.

6. Flugzeugkabine nach einem der Ansprüche 1 bis 4, **dadurch gekennzeichnet, dass** die Achsen (X2) der Sitze (13) derselben Gruppe (21) von Sitzeinheiten (12.1, 12.2) eine Nicht-Null-Winkel zueinander bilden.

7. Flugzeugkabine nach einem der Ansprüche 1 bis 6, **dadurch gekennzeichnet, dass** die Sitze (13) derselben Gruppe (21) von Sitzeinheiten (12.1, 12.2) nebeneinander angeordnet sind.

8. Flugzeugkabine nach einem der Ansprüche 1 bis 7, **dadurch gekennzeichnet, dass** die Sitze (13) derselben Gruppe (21) von Sitzeinheiten (12.1, 12.2) in Längsrichtung zueinander versetzt sind.

9. Flugzeugkabine nach einem der Ansprüche 1 bis 8, **dadurch gekennzeichnet, dass** eine Trennwand (30) die Sitze (13) derselben Gruppe (21) von Sitzeinheiten (12.1, 12.2) trennt.

10. Flugzeugkabine nach Anspruch 9, **dadurch gekennzeichnet, dass** sich die Trennwand (30) von einer Schale (20) an der Rückseite der Sitze (13) bis zu einer Vorderkante einer Sitzfläche (15) eines Sitzes (13) erstreckt.

11. Flugzeugkabine nach einem der Ansprüche 1 bis 10, **dadurch gekennzeichnet, dass** eine gangseitige Sitzeinheit (12.1, 12.2) eine versenkbare Tür (33) aufweist, um den ersten Zugang (23) wahlweise zu öffnen oder zu schließen.

12. Flugzeugkabine nach einem der Ansprüche 1 bis 11, **dadurch gekennzeichnet, dass** ein Fußbereich (17) in einer Konsole (18) mit einer als Tisch nutzbaren Oberwand (27) und/oder in einer Konsole (18) mit einem Lagerschrank (28) integriert ist.

13. Flugzeugkabine nach einem der Ansprüche 1 bis 12, **dadurch gekennzeichnet, dass** eine Sitzeinheit (12.1, 12.2) einen Bildschirm (34) umfasst.

14. Flugzeugkabine nach einem der Ansprüche 1 bis 13, **dadurch gekennzeichnet, dass** eine Sitzeinheit (12.1, 12.2) mindestens eine Armlehne (35) umfasst.

15. Flugzeugkabine nach einem der Ansprüche 1 bis 14, **dadurch gekennzeichnet, dass** eine Sitzeinheit (12.1, 12.2) eine Klappe (37) aufweist, die zwischen einer ausgefahrenen Stellung und einer eingefahrenen Stellung bewegbar ist.

16. Flugzeugkabine nach einem der Ansprüche 1 bis 15, **dadurch gekennzeichnet, dass** eine Querwand (31) die vordere Gruppe (21) der Sitzeinheiten (12.1,12.2) und die hintere Gruppe ( 21) von Sitzeinheiten (12.1, 12.2) trennt, wobei sich die Querwand (31) von einer Wand der Flugzeugkabine bis zum Gang (25) erstreckt.

17. Flugzeugkabine nach einem der Ansprüche 1 bis 16, **dadurch gekennzeichnet, dass** der erste Zugang (23) eine Breite zwischen 27,94cm (11 Zoll) und 76,20cm (30 Zoll) aufweist.

18. Flugzeugkabine nach einem der Ansprüche 1 bis 17, **dadurch gekennzeichnet, dass** der zweite Zugang (24) eine Breite zwischen 10,16cm (4 Zoll) und 27,94cm (11 Zoll) hat, unter Ausschluss vom Wert von 27,94cm (11 Zoll).

## Claims

1. An aircraft cabin (10) having a longitudinal axis (X1) and comprising at least one aisle (25) and an arrangement (11) of seat units (12.1, 12.2), a seat unit (12.1, 12.2) comprising in particular a seat (13) provided with a seating surface (15) and a backrest (14) as well as a foot zone (17), said seat (13) being movable between a seating position and a bed position, said arrangement (11) of seating units (12.1,12.2) comprising:
- at least one rear group (21) of two seat units (12.1, 12.2),
- at least one front group (21) of two seat units (12.1, 12.2),
- each group (21) of two seat units (12.1, 12.2) comprising a seat unit (12.1) on the side of the aisle (25), so-called "aisle-side seat unit" and a seat unit (12.2) on the side of a window, so-called "window-side seat unit",
**characterized in that**
- each seat (13) of a group (21) of seat units (12.1, 12.2) has an axis (X2) forming a non-zero angle with the longitudinal axis (X1) of the aircraft cabin (10), so that the seats (13) of each group (21) face the aisle (25),
- a first access passage (23) to the aisle (25) associated with the window-side seat unit (12.2) of the rear group (21) extends between the foot zone (17) and the seating surface (15) of the aisle-side seat unit (12.1) of the rear group (21), and
- a second access passage (24) to the aisle (25) associated with the window-side seat unit (12.2) of the rear group (21) extends between the aisle-side seat unit (12.1) of the front group (21) and the foot zone (17) of the aisle-side seat unit (12.1) of the rear group (21), and
- there is a longitudinal overlap between at least a portion of the foot zone (17) of the aisle-side seat unit (12.1) of the rear group (21) and at least a portion of the backrest (14) of the aisle-side seat unit (12.1) of the front group (21).

2. The aircraft cabin according to claim 1, **characterized in that** a width (L2) of the second access passage (23) is less than a width (L3) of the first access passage (24).

3. The aircraft cabin according to claim 1 or 2, **characterized in that** there is a longitudinal overlap (L4) between at least a portion of the foot zone (17) of the window-side seat unit (12.2) of the rear group (21) and at least a portion of the backrest (14) of the window-side seat unit (12.2) of the front group (21).

4. The aircraft cabin according to claim 3, **characterized in that** the portion of the foot zone (17) overlapped with at least one portion of the backrest (14) of the window-side seat unit (12.2) of the front group (21) is located between the two seat units (12.1, 12.2) of the front group (21).

5. The aircraft cabin according to any one of the claims 1 to 4, **characterized in that** the axes (X2) of the seats (13) of the same group (21) of seat units (12.1, 12.2) are parallel to each other.

6. The aircraft cabin according to any one of the claims 1 to 4, **characterized in that** the axes (X2) of the seats (13) of the same group (21) of seat units (12.1, 12.2) form a non-zero angle with respect to each other.

7. The aircraft cabin according to any one of the claims 1 to 6, **characterized in that** the seats (13) of the same group (21) of seat units (12.1, 12.2) are arranged side by side relative to one another.

8. The aircraft cabin according to any one of the claims 1 to 7, **characterized in that** the seats (13) of the same group (21) of seat units (12.1, 12.2) are longitudinally offset to one another.

9. The aircraft cabin according to any one of the claims 1 to 8, **characterized in that** a partition (30) separates the seats (13) of the same group (21) of seat units (12.1, 12.2).

10. The aircraft cabin according to claim 9, **characterized in that** the partition (30) extends from a shell (20) at the rear of the seats (13) up to a front edge of a seating surface (15) of a seat (13).

11. The aircraft cabin according to any one of the claims 1 to 10, **characterized in that** an aisle-side seat unit (12.1, 12.2) has a retractable door (33) so as to selectively open or close the first access passage (23).

12. The aircraft cabin according to any one of the claims 1 to 11, **characterized in that** a foot zone (17) is integrated in a console (18) provided with an upper wall (27) which can be used as table and/or into a console (18) provided with a storage cabinet (28).

13. The aircraft cabin according to any one of the claims 1 to 12, **characterized in that** a seat unit (12.1, 12.2) comprises a display panel (34).

14. The aircraft cabin according to any one of the claims 1 to 13, **characterized in that** a seat unit (12.1, 12.2) comprises at least one armrest (35).

15. The aircraft cabin according to any one of the claims 1 to 14, **characterized in that** a seat unit (12.1, 12.2) comprises a meal flap (37) movable between a deployed position and a stored position.

16. The aircraft cabin according to any one of the claims 1 to 15, **characterized in that** a transverse wall (31) separates the front group (21) of seat units (12. 1,12.2) and the rear group (21) of seat units (12.1, 12.2), said transverse wall (31) extending from a wall of the aircraft cabin up to the aisle (25).

17. The aircraft cabin according to any one of the claims 1 to 16, **characterized in that** the first access passage (23) has a width between 27.94cm (11 inches) and 76.20cm (30 inches).

18. The aircraft cabin according to any one of the claims 1 to 17, **characterized in that** the second access passage (24) has a width between 10.16cm (4 inches) and 27.94cm (11 inches), excluding the value of 27.94cm (11 inches) .
